# EUROPEAN PATENT SPECIFICATION

(11) **EP 2 951 335 B1**
(45) Date of publication and mention of the grant of the patent: **21.08.2019**
(21) Application number: 14745486.2
(22) Date of filing: 31.01.2014
(51) Int. Cl.: H01M 4/04, H01M 4/24, H01M 4/36, H01M 4/38, H01M 4/52, H01M 4/62, H01M 10/30

(54) **COATED IRON ELECTRODE AND METHOD OF MAKING SAME**
BESCHICHTETE EISENELEKTRODE UND VERFAHREN ZUR HERSTELLUNG DAVON
ÉLECTRODE EN FER REVÊTUE ET SON PROCÉDÉ DE FABRICATION

(30) Priority: 01.02.2013 US 201361759777 P; 31.10.2013 US 201361898151 P; 31.10.2013 US 201361898191 P; 08.11.2013 US 201361902041 P
(43) Date of publication of application: 09.12.2015
(73) Proprietor: Encell Technology, Inc., Alachua FL 32615-8503 (US)
(72) Inventor: OGG, Randy, Newberry, FL 32669 (US); WELCH, Craig, Hinton, Sarasota, FL 34243-2431 (US); SEIDEL, Alan, P., High Springs, FL 32643 (US)
(74) Representative: Haseltine Lake Kempner LLP
(86) International application number: PCT/US2014/014028
(87) International publication number: WO 2014/121009

(56) References cited:
- EP-A1- 2 461 399
- WO-A1-2010/069209
- JP-A- 2006 024 414
- US-A- 3 630 781
- US-A- 4 021 911
- US-A- 4 123 568
- US-A- 4 216 045
- US-A- 5 780 184
- US-A1- 2008 057 403
- US-A1- 2011 039 159
- US-A1- 2012 070 746

## Description

### BACKGROUND OF THE INVENTION

### Field of the Invention

The present invention is in the technical field of energy storage devices. More particularly, the present invention is in the technical field of rechargeable batteries using an iron electrode.

### State of the Art

Iron electrodes have been used in energy storage batteries and other devices for over one hundred years. Iron electrodes are often combined with a nickel base cathode to form a nickel-iron battery. The nickel-iron battery (Ni-Fe battery) is a rechargeable battery having a nickel (III) oxide-hydroxide cathode and an iron anode, with an electrolyte such as potassium hydroxide. The active materials are held in nickel-plated steel tubes or perforated pockets. It is a very robust battery which is tolerant of abuse, (overcharge, overdischarge, and short-circuiting) and can have a very long life even if so treated. It is often used in backup situations where it can be continuously charged and can last for more than 20 years. Due to its low specific energy, poor charge retention, and high cost of manufacture, however, other types of rechargeable batteries have displaced the nickel-iron battery in most applications.

Traditionally, the iron electrode active material is produced by dissolving pure iron powder in sulfuric acid, followed by drying and roasting to produce iron oxide (Fe₂O₃). The material is washed and partially reduced in hydrogen and partially oxidized to give a mix of Fe and magnetite (Fe₃O₄). Additives such as FeS may be added to the active material mass. The negative electrode structure is typically that of a pocket plate construction wherein the active material is introduced into the current collector. The current collector is made up of steel strips or ribbons that are perforated and nickel plated and the strip formed into a tube or pocket with one end left open for introduction of the active material (D. Linden and T. Reddy, Editors, "Handbook of Batteries, Third Edition", McGraw-Hill, © 2002). Alternatively, fine iron powder can be sintered under a reducing atmosphere to yield a sturdy electrode shape.

Both of these methods for producing iron electrodes are expensive, lead to low active material utilization, and poor specific energy. As a result, Ni-Fe batteries have largely been displaced by other battery technologies due to the high cost of manufacturing and low specific energy. While the technology of preparing iron electrodes is well known and the current preferred process for making these electrodes is a pocket design, pocket design electrodes are not cost effective and are complex in manufacturing. Although the theoretical capacity of an iron electrode is high, in practice only a small percentage of this is achieved due to the poor conductivity of iron oxide. In a pocket electrode design, loss of contact to the external matrix surface results in increased polarization and a drop in cell voltage. To avoid this, large amounts of conductive material such as graphite must be added to the active material, further increasing cost and lowering energy density. The industry would be well served by a low cost, high quality and high performance iron electrode design.

Other forms of electrode production are known in the art, particularly electrodes of a pasted construction. This type of electrode typically incorporates a binder with the active material, which can then be coated onto a two or three dimensional current collector, dried, and compacted to form the finished electrode.

US 3,853,624 describes a Ni-Fe battery incorporating iron electrodes employing a metal fiber structure which is loaded with sulfurized magnetic iron oxide by a wet pasting method. The plates are electrochemically formed outside the cell to electrochemically attach the iron active material to the plaque structure. Such a process is unwieldy in high volume manufacturing and adds to product cost.

US 4,021,911 describes an iron electrode wherein the iron active mass is spread onto a grid, rolled and dried. The electrode is then treated with an epoxide resin solution to form a solid reinforcing film-like layer on the electrode surface. However, it can be expected that such a surface film would contribute to an insulating nature to the electrode surface, significantly increasing charge transfer resistance and lowering the cell's ability to sustain high charge and/or discharge rates.

Similarly, PTFE has been proposed as a binder system for paste type electrodes for alkaline batteries. US 3,630,781 describes the use of a PTFE aqueous suspension as a binder system for rechargeable battery electrodes. However, to maintain the PTFE powder in suspension, it is necessary to add surfactants to the suspension, which must be removed from the resultant electrode by extensive washing, adding cost and complexity to the manufacturing process. An alternative approach for a PTFE-bonded electrode is described in US 4,216,045 using fluorocarbon resin powder to form a sheet which can be attached to a conductive body. However, the use of PTFE results in a water-repellent surface, which while beneficial in a recombinant battery such as NiCd or NiMH, is detrimental to the performance of a flooded Fe-Ni battery where good contact between the electrode and electrolyte is beneficial.

Pasted electrodes using various binders have been proposed for alkaline electrodes, most particularly for electrodes employing hydrogen-absorbing alloys for NiMH batteries (for example US 5,780,184). However, the desired properties for these electrodes differ significantly from those desired for a high capacity iron electrode. In the case of the MH electrode, high electrode density (low porosity) is required to maintain good electrical contact between the alloy particles and to facilitate solid-state hydrogen diffusion in the alloy. By contrast, high porosity is desirable for iron electrodes due to the low solubility of the iron oxide species. Hence, binder systems developed for other types of alkaline electrodes have not been optimized for Ni-Fe batteries and hence have not found commercial applications. US 4,123,568 and WO 2010/069209 describes an iron electrode comprising iron active material and polyviniylalcohol as binder.

The methods used in the preparation of the iron electrode (anode) have contributed to the low performance versus cost of the Ni-Fe battery.

The technology of preparing iron electrodes is well known and the current preferred process for making these electrodes is a pocket design. The pocket design is not cost effective and is complex in its manufacture. Pocket design electrodes are also difficult to produce in high volumes, and the energy and power utilization from this design is low. What is needed is a low cost, high volume, high quality and high performance iron electrode design and manufacturing process.

### SUMMARY OF THE INVENTION

The present invention provides one with a novel coated iron electrode and an improved method of manufacturing the iron electrode. Provided is an iron based electrode and a process for preparing an iron electrode according to the claims. The iron based electrode is useful in a Ni-Fe battery as the anode. The electrode is prepared by coating the substrate with a coating mixture comprising the iron active material and binder.

The manufacturing benefits are lower cost, higher volume, continuous process, if desired, and a higher quality product and method for manufacturing compared to the standard pocket electrode design.

Among other factors, it has been discovered that a high quality and high performance iron electrode can be made most economically using a continuous coating process. Produced is a paste style iron electrode utilizing a single conductive substrate to enable a high capacity iron electrode for use in a rechargeable battery system including, but not limited to, Ni-Fe, Ag-Fe, Fe-air, or MnO₂-Fe.

Among other factors, it has been discovered that a multilayer coated iron electrode can provide desirable advantages. The different layers can be different in various physical characteristics or in composition. The physical characteristics can in include porosity. With layers of different porosity, for example, improved flow of gases from the active material to the electrolyte can be achieved. Different additives can be added to the coating composition of each different layer to also provide focused and effective results in the operation of the iron electrode.

### BRIEF DESCRIPTION OF THE FIGURES OF THE DRAWING

Figure 1 is a flow chart for the manufacture of the iron electrode of the present invention using a continuous process.
Figure 2 is a perspective view of a coated iron electrode of the present invention.
Figure 3 is a side view and cross-section view of an iron electrode coated on both sides of the substrate in accordance with the present invention.
Figure 4 is a perspective view of a current pocket iron electrode.
Figure 5 is a side view and a cross-section view of a current pocket iron electrode.
Figure 6 is discharge capacities for Ni-Fe cells with iron electrodes having varied binder compositions.
Figure 7 is discharge capacities for Ni-Fe cells with iron electrodes having varied nickel and iron content.
Figure 8 is discharge capacities for Ni-Fe cells with iron electrodes having varied sulfur content.

### DETAILED DESCRIPTION OF THE INVENTION

The invention comprises an iron electrode comprised of a single, coated conductive substrate, prepared by a simple coating process, which can be continuous.

The substrate is used as a current conducting and collecting material that houses the active material (iron) of the electrode. In the current pocket design, the substrate encompasses the active material and holds the material. Two layers of substrate are therefore required per electrode. In the present invention, a single layer of substrate is used. This single layer acts as a carrier with coated material bonded to at least one side. In one embodiment, both sides of the substrate are coated. This substrate may be a thin conductive material such as a metal foil or sheet, metal foam, metal mesh, woven metal, or expanded metal. For example, a 0.15 cm (0.060 inch), 31 ppcm (80 ppi), nickel foam material has been used. In one embodiment, the substrate is a three-dimensional material such as a metal foam or metal felt. In one embodiment, a nickel plated perforated foil can be used.

The coating mixture applied to the substrate is a combination of binder and active materials in an aqueous or organic solution. The mixture can also contain other additives such as pore formers or conductive additives. Conductive additives include but are not limited to carbon, graphite, or Ni powder. Pore formers can be incorporated to enhance electrode porosity and include but are not limited to ammonium carbonate and ammonium bicarbonate. Other additive that may be included in the coating mixture are bismuth, tin, sulfur, and metal sulfides, in the invention elemental sulfur is included as additive. The binder materials have properties that provide adhesion and bonding between the active material particles, both to themselves and to the substrate current collector. The binder is generally resistant to degradation due to aging, temperature, and caustic environment. The binder can comprise polymers, alcohols, rubbers, and other materials, such as an advanced latex formulation that has been proven effective. A polyvinyl alcohol (PVA) binder is used in the invention. Use of a binder to mechanically adhere the active material to the supporting single substrate eliminates the need for expensive sintering or electrochemical post-treatment. Aqueous based solutions have the advantage of lower toxicity and removal of water during the drying process is environmentally friendly and does not require further treatment or capture of the solvent.

There are several advantages to employing PVA as a binder versus conventional binders. PVA is readily water soluble, simplifying the manufacturing process by allowing for direct addition of a PVA solution to the active material mix and eliminating issues associated with shelf life common with PTFE binders. PVA does not impart a hydrophobic nature to the electrode surface, insuring good contact between the active material and the alkaline electrolyte. PVA can be added to the active material paste in the form of a concentrated solution or in powder form. PVA that is hydrolyzed between 98.5 and 100% is preferred in one embodiment. A most preferred embodiment uses PVA that is hydrolyzed between 99.2 and 100%. Furthermore, the PVA has a 4% water solution viscosity between 3 - 70 cP at 20 °C. In a preferred embodiment, the viscosity of a 4% water solution of the PVA is between 20-40 cP at 20 °C. In a most preferred embodiment, the viscosity of a 4% water solution of the PVA is between 27-33 cP at 20 °C. Concentrations of PVA in the final paste are 2.5 to 5% by total weight. Preferred concentrations of PVA are in the range of 2.5 to 4%. Lower concentrations of PVA do not provide sufficient binding of the active material, while higher concentrations result in an increase in electrode electrical resistance, degrading the performance of the battery under high current loads.

The active material for the mix formulation is selected from iron species that can be reversibly oxidized and reduced. Such materials include metal Fe, iron oxide materials or mixtures thereof. The iron oxide material will convert to iron metal when a charge is applied. A suitable iron oxide material includes Fe₃O₄. A preferred form of iron is hydrogen reduced with a purity of about 96% or greater and having a 325 mesh size. In addition, other additives may be added to the mix formulation. These additives include but are not limited to sulfur, antimony, selenium, tellurium, bismuth, tin, and metal sulfides. Conductive additives that my be added include but are not limited to nickel powder, carbon, and graphite.

Sulfur as an additive has been found to be useful in concentrations ranging from 0.25 to 1.5% and higher concentrations may improve performance even more. Nickel has been used as a conductivity improver and concentrations ranging from 8 to 20% have been found to improve performance and higher concentrations may improve performance even more.

A further advantage of the electrode of the present invention is that additives can be combined into the paste formulation since electrode processing is done at relatively low temperatures where the additives would otherwise be lost at high temperatures. Use of a sintered construction as described in the prior literature precludes addition of additives such as sulfur to the active mass since they would be lost during the sintering process.

The coating method can be a continuous process that applies the active material mixture to the substrate such as spraying, dip and wipe, extrusion, low pressure coating die, or surface transfer. A batch process can also be used, but a continuous process is advantageous regarding cost and processing. The coating mixture has to maintain a high consistency for weight and thickness and coating uniformity. This method is conducive to layering of various materials and providing layers of different properties such as porosities, densities and thicknesses. For example, the substrate can be coated with three layers. The first layer being of high density, second layer of medium density, and final layer of a lower density to create a density gradient which improves the flow of gases from the active material to the electrolyte, and provides better electrolyte contact and ionic diffusion with the active material throughout the structure of the electrode.

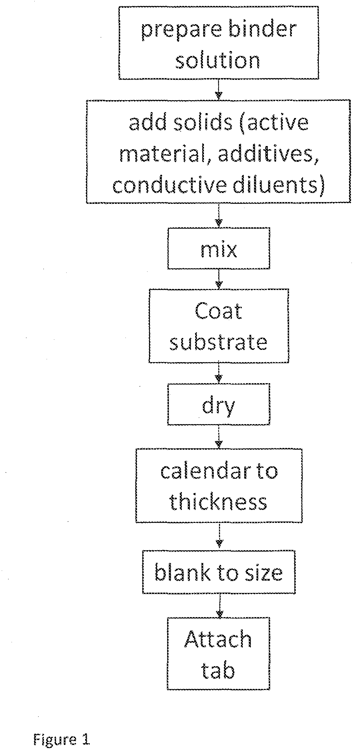

Accordingly, the present invention also provides a process for producing an iron electrode comprised of a single conductive substrate coated with iron active material on one or both sides prepared by a continuous coating process. The process comprises mixing iron active material with a binder in a suitable solvent, coating a continuous substrate material on at least one side with the active material mix, drying said coating, and compacting the resultant coating to the desired thickness, blanking, and attaching a tab to the electrode body. An overall process is schematically shown in Figure 1.

In one embodiment, the coating method is a continuous process. The process comprises mixing an iron active material, generally with a binder in suitable solvent, coating a continuous substrate material on at least one side with the active material mix, drying the coating to the desired thickness, blanking or cutting the coated substrate to the desired size, and attaching a tab to the electrode. The coating step applies the active material mixture to the substrate, such as spraying, dip and wipe, extrusion, low pressure coating die, or surface transfer. A low pressure coating die is used in one embodiment. The coating method must maintain a high consistency for weight, thickness, and coating uniformity. This insures that finished electrodes will have similar loadings of active material to provide uniform capacity in the finished battery product.

The coating method of the invention is conducive to layering of various materials and providing layers of different properties, such as porosities, densities, and thicknesses. For example, the substrate can be coated with three layers; the first layer being of high density, second layer of medium density, and final layer of a lower density to create a density gradient. This gradient improves the flow of gases from the active material to the electrolyte and provides better electrolyte contact and ionic diffusion with the active material throughout the structure of the electrode. Outer layers may have high porosity and surface area to improve active material utilization and rate capability. Surface and outer layers may contain additives that increase the hydrogen overpotential and additives such as sulfur that help reduce early passivation of the electrode. Highly dense inner layers improve electrical connectivity to the substrate.

In one embodiment, the invention comprises an iron electrode comprised of a multilayered coating on a single conductive substrate. The coating is comprised of two or more layers. Each layer of the coating has a different porosity and/or composition than an adjacent layer. Layering may be accomplished by applying successive coating mixtures to the conductive substrate. Between each coating application, the electrode is dried and may be calendared to a desired thickness. Variation of porosity in each layer may be achieved by applying varying pressure to the coating mixture during application, inclusion of pore formers, composition of the coating mixture, and varying the calendaring thickness after coating. The composition of the layers is determined by the composition of the coating mixture.

The layering can be accomplished by applying successive coating mixtures to the conductive substrate. Between each coating application, the electrode can be dried can be calendared to a desired thickness. Variation of porosity in each layer can be achieved, for example, by applying varying pressure during application, inclusion of pore formers, and varying the calendaring thickness after coating.

After coating, the electrode is dried to remove any residual liquid, i.e., aqueous or organic solvent. The drying methods will generally provide a continuous method for liquid removal from the coated active material which will enhance the adhesion and binding effects of the dry constituents without iron ignition. This drying method provides a uniform and stable active material coating with the substrate material. Two stages of drying can be used. For example, the first can be radiation for bulk drying, for cost and quality control, followed by convection drying to remove the remaining liquid. The radiation used can be any radiation, such as infrared, microwave or UV, and is very fast. However, the radiation creates a high temperature at the surface of the coated electrode. The high temperature is fine as long as water is still present to act as a heat sink. Therefore, the water is generally removed to about 10-20 wt% water. This can generally be determined using a control chart. Going below 10% water is dangerous, as the electrode becomes too dry and the high temperature can ignite the iron. Thus, using the convention drying to complete the removal of water/liquid is a preferred embodiment, once the amount of water remaining is in the 10-20wt% range. In another embodiment, radiation can be used to complete the drying if the process is conducted in an inert atmosphere.

The compaction methods used can be accomplished by rolling mill, vertical pressing, and magnetic compaction of the active material to the desired thickness from 0.005 to 0.500 inches and porosities from 10% to 50%, for high quality and low cost continuous processing. In one embodiment, the porosity of the electrode is from 15-25 % porosity. This compaction method can be used in conjunction with the layering method described above for providing material properties of density, thickness, porosity, and mechanical adhesion.

In addition, continuous in-line surface treatments can be applied continuously throughout any of the steps including coating, layering, and drying processes. The treatments can apply sulfur, polymer, metal spray, surface lament, etc.

Blanks of the electrode are cut to the desired size from the continuous substrate material. The lengthwise size of the blanks will depend on the battery into which the electrode is to be used. The blanks can be cut before the drying step, with each of the separate blanks then dried. The blank can also be cut to the desired size after drying but before compaction. In the embodiment, each blank is then compacted to the desired thickness. In one embodiment, the blanks are cut as noted in Figure 1, after the drying and compaction steps.

After the drying compaction and blanking steps, a tab is generally attached to the electrode for connection purposes. The tab is constructed of a conductive material and can be attached using conventional methods, such as welding.

The iron electrode can be used with a suitable positive electrode (cathode) to make a battery, e.g., a Ni-Fe battery with a nickel cathode and the iron electrode of this invention. The battery can be made as is conventional, with a standard electrolyte and battery separator. The electrolyte, for example, can be a potassium hydroxide based electrolyte.

The present batteries including the iron electrode can be used, for example, in a cellphone, thereby requiring an electrode with only a single side coated. However, both sides are preferably coated, allowing the battery to be used in many applications as is known in the art.

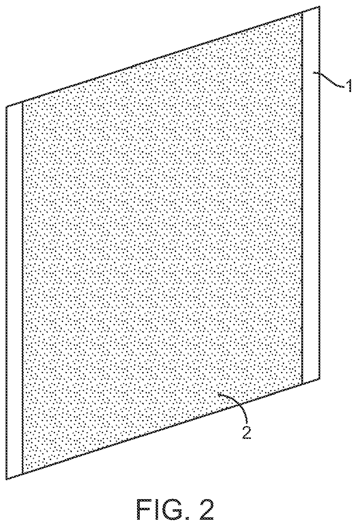

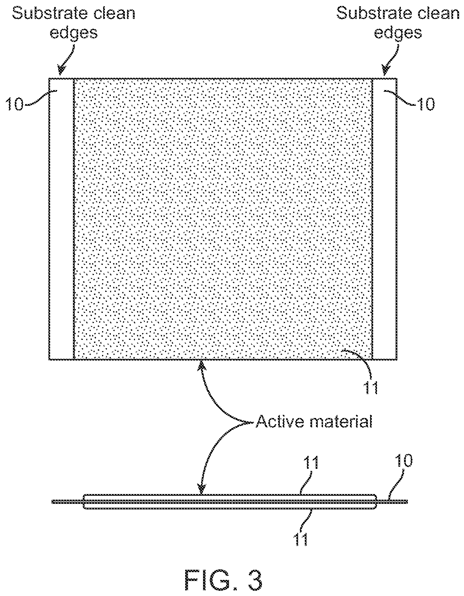

Turning to the figures of the drawing, Figure 2 is a prospective view of a coated iron electrode. The substrate 1 is coated on each side with a coating 2 comprising the iron active material and binder. This is further shown in Figure 3. In Figure 3, the substrate 10 is coated on each side with the coating 11 of the iron active material and binder. The substrate may be coated continuously across the surface of the substrate, or preferably, as shown in Figures 2 and 3, cleared lanes of substrate may be uncoated to simplify subsequent operations such as welding of current collector tabs.

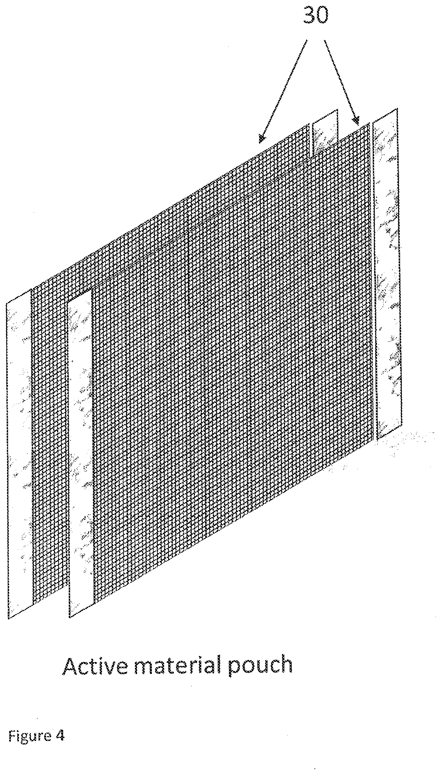

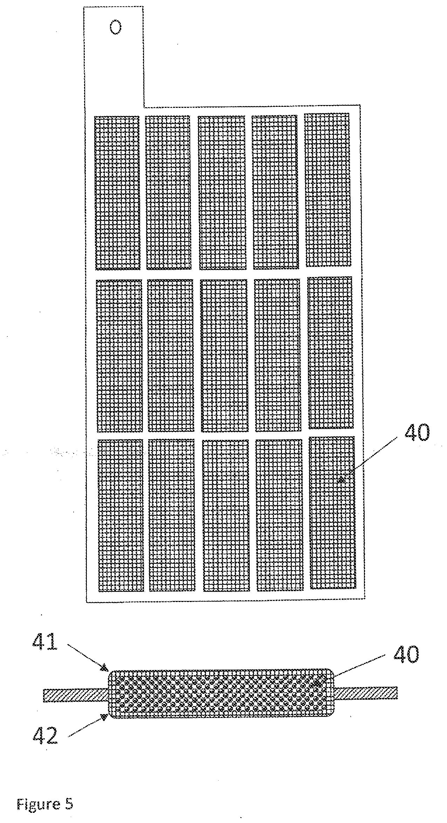

Figures 4 and 5 of the drawing show a conventional pocket iron electrode. In Figure 4, the two substrates 30 are shown to form the pocket which holds the iron active material. In Figure 5, the iron active material 40 is held between the two substrates 41 and 42.

### ILLUSTRATIVE EXAMPLES

### Paste preparation

A water based paste comprised of hydrogen reduced iron powder (325 mesh size), 16% nickel powder #255, 0.5% elemental sulfur powder (precipitated, purified) and the appropriate amount of binder was prepared using a digital stirring device and 3-wing stirring blade operating at 1300 RPM for 10-15 minutes. Deionized water was added to the mixture to create a paste with a viscosity between 120,000-130,000 cP.

### Electrode preparation

### Example 1

The water based paste was applied to a 4.14 cm (1.63 inch) wide nickel-plated continuous perforated strip with 2-mm perforations by feeding the strip fed through the top of an open-bottomed pot attached to a doctor-blade fixture with a gap width set to 0.17 cm (0.068 inch). The paste mixture is poured into the pot and the perforated strip is pulled down at a rate of 82 cm/ min (2.7 ft/min) coating the perforated strip with the paste mixture. Segments ranging 10-13 cm (4-5 inch) are cut from the coated strip and placed into a drying oven at 65.6°C (150 °F) for 20 minutes.

After drying the coated strips were cut to a standard length of 7.6 cm (3 inch) and then compressed to thickness to achieve a porosity of approximately 40%. Dried paste mixture was removed from the top 0.64 cm (0.25 inch) of the strip in order to provide a clean space for a stainless steel tab to be spot-welded onto.

### Example 2

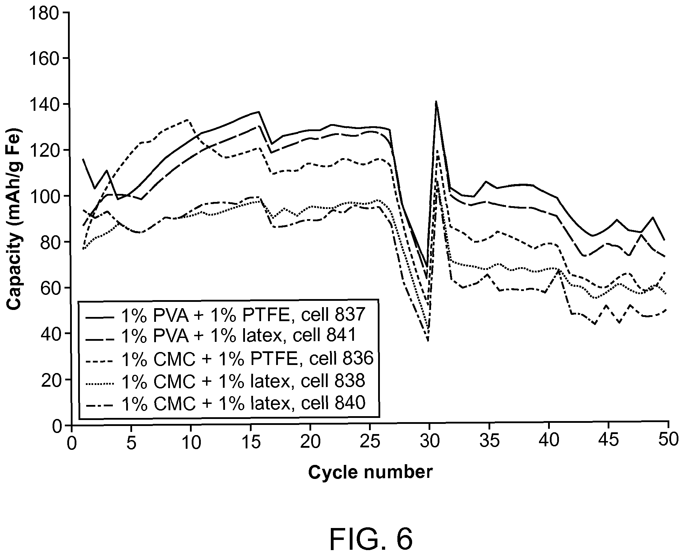

A series of iron electrodes were prepared by impregnating nickel foam with various pastes comprising several different binder compositions described in Table 1. The discharge capacities of the individual cells prepared from these electrodes were measured and plotted against the amount of iron in the anode in Figure 6. The effect of rate on capacity was evaluated by discharging the cells at multiple rates of C/10, C/5, C/2, and 2C where C represents the current required to discharge the cell in one hour.

**Table 1.**

| Cell # | Binder | Binder | g of iron |
|---|---|---|---|
| 1 | 1% CMC | 1% PTFE | 6.4 |
| 2 | 1% PVA | 1% PTFE | 8.5 |
| 3 | 1% CMC | 1% AL-2002 latex | 7.9 |
| 4 | 1% CMC | 1% AL-3001 latex | 7.4 |
| 5 | 1% PVA | 1% AL-1002 latex | 8.3 |

Cells # 1-5 are reference examples.

Since the binder can contribute to electrode resistance, it is desirable to employ a binder that minimizes an increase in cell resistance and offers the highest mA h/g capacity. Comparing the 2C capacities of the Ni-Fe batteries, the best results at 2C discharge rate were obtained in cells employing PVA as a binder.

### Example 3

Water based pastes (Table 2) were applied to a 4.14 cm (1.63 inch) wide nickel-plated perforated strip with 2-mm perforations by continuously feeding the strip fed through the top of an open-bottomed pot attached to a doctor-blade fixture with a gap width set to 0.17 cm (0.068 inch). The paste mixture is poured into the pot and the perforated strip is pulled down at a rate of 82 cm/min (2.7 ft/min) coating the perforated strip with the paste mixture. Segments ranging 10-13 cm (4-5 inch) are cut from the coated strip and placed into a drying oven at 150 °C for 20 minutes.

**Table 2.**

| Sample | PVA concentration (%) | Iron in electrode (g) | Capacity (mAh/g Fe) |
|---|---|---|---|
| 1 | 3.5 | 8.3 | 117 |
| 2 | 3.5 | 8.45 | 116 |
| 3 | 3.5 | 11.4 | 112 |
| 4 | 5 | 8.25 | 89 |
| 5 | 7 | 10.1 | 69 |
| 6 | 9 | 8.55 | 8 |

Samples 5 and 6 are reference examples.

After drying the coated strips were cut to a standard length of 7.6 cm (3 inch) and then compressed to thickness to achieve a porosity of approximately 40%. Dried paste mixture was removed from the top 0.64 cm (0.25 inch) of the strip in order to provide a clean space for a stainless steel tab to be spot-welded onto.

A series of continuously coated iron electrodes were prepared by coating perforated NPS with an aqueous mixture of iron powder, nickel powder as a conductivity aid, elemental sulfur and employing PVA as a binder. Multiple levels of PVA were employed in the mixes to evaluate the effect of binder concentration on mechanical stability of the electrode and rate capability of the electrode. At concentrations below 3 weight percent PVA, the physical integrity of the electrodes was unacceptable. Concentrations of binder above about 5 weight percent showed a sharp drop in discharge capacity, most likely due to increased electrode resistance and possibly masking of the active material from the electrolyte interface. Data for cells with varying levels of PVA is summarized in Table 2.

### Example 4

A 10 wt% solution of PVA (Elvanol 7130) preheated to between 48.9 - 51.7 °C (120 - 125 °F) was added to a jacketed container with iron powder (325 mesh), nickel powder #255, and sulfur preheated to 48.9 °C (120°F). This mixture was stirred for 30 minutes at 48.9 °C (120°F). The solid component mixture of this paste was 80% iron, 16% nickel, 0.4% sulfur, and 3.5% PVA. Viscosity measurements of the paste had a range of 25000 to 39000 cP immediately after removal from the container and after a further 90 seconds, the viscosity ranged from 22000 to 31000 cP.

The paste mixture was then transferred to a jacketed holding tank preheated to 43.3 °C (110 °F) where it was stirred. The paste was pumped to a paste hopper where a perforated nickel plated steel strip was coated. The coated strip was then passed through a doctor blade to achieve a coating thickness between 0.10-0.13 cm (0.040-0.050 inch) and introduced to a vertical drying oven. The first stage of drying consisted of IR heating at 116 °C (240 °F) for 1.67 minutes followed by heating in a conventional oven at 116 °C (240 °F) for 3.35 minutes. The second drying stage with a residence time of 1.7 minutes consisted of forced hot air with a set drying temperature of 127 °C (260 °F). The paste temperature exiting the ovens did not exceed 98.9 °C (210 °F). After cooling, the finished coating was calendared to a thickness of 0.064 cm (0.025 inch). Pieces of the coating were cut to size and weighed to obtain coating porosity. The porosity ranged from 34 - 43% with a targeted porosity of 38%.

Electrodes from Example 4 were used to construct a Ni-Fe battery. Table 3 shows the performance of the iron electrode in comparison to other commercial Ni-Fe batteries employing pocket plate electrodes.

**Table 3.**

| Cell | Chinese Seiden | Chinese Taihang | Ukrainian | Russian | Zappworks | Electrode of present invention |
|---|---|---|---|---|---|---|
| Ah/g (powder) | 0.095 Ah/g | 0.130Ah/g | 0.117 Ah/g | 0.116Ah/g | - | 0.126 Ah/g |
| Ah/g (total electrode) | 0.059 Ah/g | 0.076 Ah/g | 0.075 Ah/g | 0.084 Ah/g | 0.034 Ah/g | 0.105 Ah/g |
| Ah/cm³ (total electrode) | 0.199 Ah/cm³ | 0.203 Ah/cm³ | 0.216 Ah/cm³ | 0.238 Ah/cm³ | 0.099 Ah/cm³ | 0.430 Ah/cm³ |
| Type of iron electrode | Pocket plate | Pocket plate | Pocket plate | Pocket plate | Pocket plate | Continuous coated (Pasted) |

### Example 5

### Paste Preparation

A water based paste comprised of hydrogen reduced iron powder (325 mesh size), nickel powder #255, elemental sulfur powder (precipitated, purified) and the appropriate amount of binder was prepared using a digital stirring device and 3-wing stirring blade operating at 1300 RPM for 10-15 minutes. Deionized water was added to the mixture to create a paste with a viscosity between 120,000-130,000 cP. The nickel and iron content was varied according to Table 3, the sulfur content was 0.5%, and the binder content was 3.5%.

Water based pastes with varying nickel and iron content (Table 4) were applied to a 4.14 cm (1.63 inch) wide nickel-plated perforated strip with 2-mm perforations by feeding the strip fed through the top of an open-bottomed pot attached to a doctor-blade fixture with a gap width set to 0.17 cm (0.068 inch). The paste mixture is poured into the pot and the perforated strip is pulled down at a rate of 82 cm/min (2.7 ft/min) coating the perforated strip with the paste mixture. Segments ranging 10-13 cm (4-5 inch) are cut from the coated strip and placed into a drying oven at 150 °C for 20 minutes.

**Table 4.**

| Sample | Nickel (%) | Iron % |
|---|---|---|
| 1 | 8 | 88 |
| 2 | 12 | 84 |
| 3 | 16 | 80 |
| 4 | 20 | 76 |

After drying the coated strips were cut to a standard length of 7.6 cm (3 inch) and then compressed to thickness to achieve a porosity of approximately 40%. Dried paste mixture was removed from the top 0.64 cm (0.25 inch) of the strip in order to provide a clean space for a stainless steel tab to be spot-welded onto.

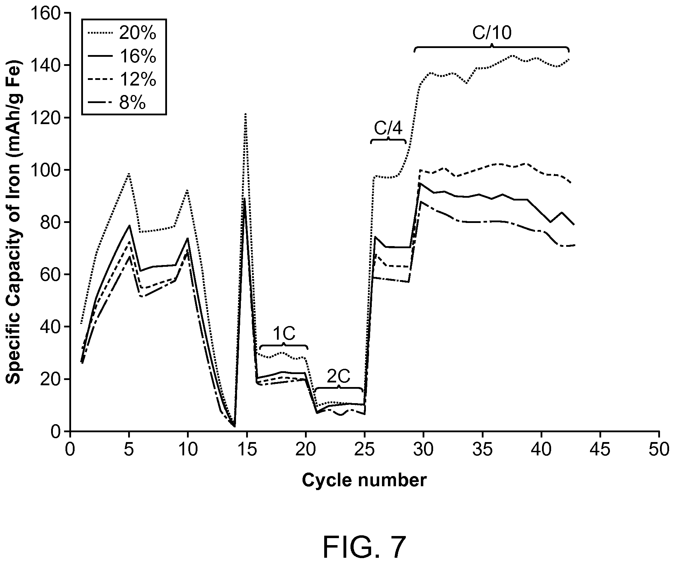

Ni-Fe cells were constructed using electrodes fabricated from the pastes with varying nickel and iron content. The data is shown in Figure 7. The cell performance does not appear to be very dependent upon nickel concentration in the concentration range between 8-16% but improved capacity at high (1 C) and low rates (C/10) is observed for electrodes with 20% nickel.

### Example 6

### Paste Preparation

A water based paste comprised of hydrogen reduced iron powder (325 mesh size), nickel powder #255, elemental sulfur powder (precipitated, purified) and the appropriate amount of binder was prepared using a digital stirring device and 3-wing stirring blade operating at 1300 RPM for 10-15 minutes. Deionized water was added to the mixture to create a paste with a viscosity between 120,000-130,000 cP. The nickel content was 16%, polyvinyl alcohol 3.5%, and the sulfur content was varied between 0 and 1.5 % with the remainder of the electrode composition being iron powder.

Water based pastes with varying sulfur content were applied to a 4.14 cm (1.63 inch) wide nickel-plated perforated strip with 2-mm perforations by feeding the strip fed through the top of an open-bottomed pot attached to a doctor-blade fixture with a gap width set to 0.17 cm (0.068 inch). The paste mixture is poured into the pot and the perforated strip is pulled down at a rate of 82 cm/min (2.7 ft/min) coating the perforated strip with the paste mixture. Segments ranging 10-13 cm (4-5 inch) are cut from the coated strip and placed into a drying oven at 150 °C for 20 minutes.

After drying the coated strips were cut to a standard length of 7.6 cm (3 inch) and then compressed to thickness to achieve a porosity of approximately 40%. Dried paste mixture was removed from the top 0.64 cm (0.25 inch) of the strip in order to provide a clean space for a stainless steel tab to be spot-welded onto.

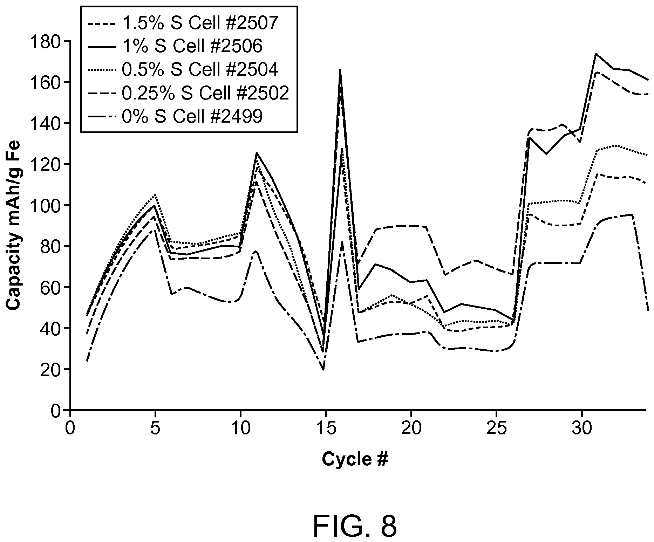

Ni-Fe cells were constructed using electrodes fabricated from the pastes with varying sulfur content. The data is shown in Figure 8. Increasing the sulfur content of the electrode increases the capacity at the C/10 discharge rate until the sulfur content reaches about 1.5% where there is no further increase in capacity. Increasing the sulfur content increased the capacity of the iron electrode even at sulfur contents up to 1.5% at the 1 C and 2C discharge rates.

In Ni-Fe cells constructed with iron electrodes prepared using the process of the foregoing examples, an electrolyte comprising sodium hydroxide (NaOH), lithium hydroxide (LiOH), and sodium sulfide (Na₂S) was used. A sintered nickel electrode impregnated with nickel hydroxide was used as the positive electrode and a 0.010 inch thick polyolefin nonwoven mesh was used as the separator in these examples of Ni-Fe cells with the iron electrode of the present invention. The electrolyte used in the conventional Ni-Fe battery was potassium hydroxide (KOH) and the anode and cathode were kept electrically isolated using a spacer. The results show a vast improvement in performance characteristics for the inventive Ni-Fe battery.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the appended claims.

## Claims

1. An electrode which comprises a single layer of a conductive substrate coated on at least one side with a coating comprising an iron active material and a binder, wherein the binder comprises polyvinyl alcohol and elemental sulfur, and wherein the amount of polyvinyl alcohol in the electrode is in the range of from 2.5 to 5 wt %.

2. The iron electrode of claim 1, which comprises a single layer of a conductive substrate coated on at least one side with a coating comprising an iron active material, with the coating comprising at least two layers.

3. The iron electrode of claim 2, wherein the coating comprises two layers, or wherein the coating comprises three layers.

4. The iron electrode of claim 3, wherein the two layers or at least two of the three layers have different porosities.

5. The iron electrode of claim 3, wherein the two layers or at least two of the three layers have different composition.

6. The iron electrode of claim 1 wherein the amount of polyvinyl alcohol in the electrode is in the range of from 2.5 to 4 wt %.

7. The iron electrode of claim 1, wherein the iron electrode further comprises an additive.

8. A process for preparing an iron electrode, comprising
- preparing a mix comprising an iron active material, elemental sulfur, and a binder;
- coating a continuous substrate material on at least one side with the mix;
- drying, compacting and cutting the electrode to size; and attaching a tab to the electrode,
- wherein the binder comprises polyvinyl alcohol and wherein the amount of polyvinyl alcohol in the electrode is in the range of from 2.5 to 5 wt %.

9. The process of claim 8, wherein the amount of polyvinyl alcohol in the electrode is in the range of from 2.5 to 4 wt %.

10. The process of claim 8, wherein the coating of the continuous substrate comprises layering of materials having different properties.

11. The process of claim 10, wherein the layers have different porosities and/or densities and/or different concentrations of additives.

12. The process of claim 8, wherein the drying is conducted with a combination of IR, microwave or UV drying in a first step, and convection drying in a second step.

13. A battery comprising a nickel based cathode and the electrode of any one of claims 1 to 7 as the anode.

## Patentansprüche

1. Elektrode mit einer einzigen Schicht aus einem leitenden Substrat, wobei mindestens eine Seite beschichtet ist, wobei die Beschichtung ein aktives Eisen und ein Bindemittel umfasst, wobei das Bindemittel Polyvinylalkohol und Elementarschwefel umfasst und wobei die Polyvinylalkohol-Menge in der Elektrode zwischen 2,5 und 5 Gewichtsprozent ausmacht.

2. Eisenelektrode gemäß Anspruch 1 mit einer einzigen Schicht aus einem leitenden Substrat, wobei mindestens eine Seite beschichtet ist, wobei die Beschichtung ein aktives Eisen umfasst und wobei die Beschichtung mindestens zwei Schichten umfasst.

3. Eisenelektrode gemäß Anspruch 2, wobei die Beschichtung zwei Schichten umfasst oder wobei die Beschichtung drei Schichten umfasst.

4. Eisenelektrode gemäß Anspruch 3, wobei die zwei Schichten oder mindestens zwei der drei Schichten unterschiedliche Porositäten aufweisen.

5. Eisenelektrode gemäß Anspruch 3, wobei die zwei Schichten oder mindestens zwei der drei Schichten eine unterschiedliche Zusammensetzung aufweisen.

6. Eisenelektrode gemäß Anspruch 1, wobei die Polyvinylalkohol-Menge in der Elektrode zwischen 2,5 und 4 Gewichtsprozent ausmacht.

7. Eisenelektrode gemäß Anspruch 1, wobei die Eisenelektrode ferner einen Zusatzstoff umfasst.

8. Verfahren zur Herstellung einer Eisenelektrode, umfassend
- eine Mischung herstellen, die aktives Eisen, Elementarschwefel und ein Bindemittel aufweist;
- das Substrat kontinuierlich auf mindestens einer Seite mit der Mischung beschichten;
- die Elektrode trocknen, verdichten und zuschneiden; und eine Lasche an der Elektrode anbringen,
- wobei das Bindemittel Polyvinylalkohol umfasst und wobei die Polyvinylalkohol-Menge in der Elektrode zwischen 2,5 und 5 Gewichtsprozent ausmacht.

9. Verfahren gemäß Anspruch 8, wobei die Polyvinylalkohol-Menge in der Elektrode zwischen 2,5 und 4 Gewichtsprozent ausmacht.

10. Verfahren gemäß Anspruch 8, wobei das Beschichten des kontinuierlichen Substrats Materialschichten mit verschiedenen Eigenschaften umfasst.

11. Verfahren gemäß Anspruch 10, wobei die Schichten unterschiedliche Porositäten und/oder Dichten und/oder unterschiedliche Additiv-Konzentrationen aufweisen.

12. Verfahren gemäß Anspruch 8, wobei das Trocknen in einem ersten Schritt mit einer Kombination aus IR-, Mikrowellen- oder UV-Trocknung und in einem zweiten Schritt mit Konvektionstrocknung erfolgt.

13. Batterie, umfassend eine Kathode auf Nickelbasis, wobei die Elektrode gemäß einem der Ansprüche 1 bis 7 als Anode dient.

## Revendications

1. Une électrode qui comprend une seule couche d'un substrat conducteur revêtue sur au moins une face d'un revêtement comprenant un matériau actif ferreux et un liant, dans laquelle le liant comprend de l'alcool de polyvinyle et du soufre élémentaire, et dans laquelle la quantité d'alcool de polyvinyle dans l'électrode est dans la plage allant de 2,5 à 5 % en poids.

2. L'électrode en fer selon la revendication 1, qui comprend une seule couche d'un substrat conducteur revêtue sur au moins une face d'un revêtement comprenant un matériau actif ferreux, avec le revêtement comprenant au moins deux couches.

3. L'électrode en fer selon la revendication 2, dans laquelle le revêtement comprend deux couches, ou dans laquelle le revêtement comprend trois couches.

4. L'électrode en fer selon la revendication 3, dans laquelle les deux couches ou au moins deux des trois couches ont des porosités différentes.

5. L'électrode en fer selon la revendication 3, dans laquelle les deux couches ou au moins deux des trois couches ont une composition différente.

6. L'électrode en fer selon la revendication 1, dans laquelle la quantité d'alcool de polyvinyle dans l'électrode est dans la plage allant de 2,5 à 4 % en poids.

7. L'électrode en fer selon la revendication 1, dans laquelle l'électrode en fer comprend en outre un additif.

8. Un procédé de préparation d'une électrode en fer, comprenant :
- la préparation d'un mélange comprenant un matériau actif ferreux, du soufre élémentaire et un liant ;
- le revêtement d'un matériau de substrat continu sur au moins une face avec le mélange ;
- le séchage, le compactage et la découpe de l'électrode sur mesure ; et la fixation d'une languette à l'électrode,
- dans laquelle le liant comprend de l'alcool de polyvinyle et dans laquelle la quantité d'alcool de polyvinyle dans l'électrode est dans la plage allant de 2,5 à 5 % en poids.

9. Le procédé selon la revendication 8, dans lequel la quantité d'alcool de polyvinyle dans l'électrode est dans la plage allant de 2,5 à 4 % en poids.

10. Le procédé selon la revendication 8, dans lequel le revêtement du substrat continu comprend la superposition de matériaux ayant des propriétés différentes.

11. Le procédé selon la revendication 10, dans lequel les couches ont des porosités et / ou des densités différentes et / ou des concentrations différentes d'additifs.

12. Le procédé selon la revendication 8, dans lequel le séchage est effectué avec une combinaison de séchage IR, micro-ondes ou UV dans une première étape, et de séchage par convection dans une deuxième étape.

13. Une batterie comprenant une cathode à base de nickel et l'électrode de l'une quelconque des revendications 1 à 7 comme anode.
